# EUROPEAN PATENT APPLICATION

(11) **EP 4 851 763 A1**
(43) Date of publication of application: **09.12.2026**
(21) Application number: 25773143.0
(22) Date of filing: 19.03.2025
(51) Int. Cl.: G06F 3/0354, G06F 3/16

(54) **CALL CONTROL METHOD, SYSTEM, AND RELATED APPARATUS**

(30) Priority: 21.03.2024 CN 202410330913
(71) Applicant: HUAWEI TECHNOLOGIES CO., LTD., Shenzhen, Guangdong 518129 (CN)
(72) Inventor: WANG, Chunpeng, Shenzhen, Guangdong 518129 (CN); LI, Chunjian, Shenzhen, Guangdong 518129 (CN); LUO, You, Shenzhen, Guangdong 518129 (CN)
(74) Representative: Huawei European IPR
(86) International application number: PCT/CN2025/083335
(87) International publication number: WO 2025/195397

(57) **Abstract**

This application discloses a call control method, a system, and a related apparatus. After receiving a first input, an electronic device obtains a status of a stylus. Based on the status of the stylus, the electronic device captures audio data via a microphone of the electronic device and/or a microphone of the stylus. In this way, the electronic device determines, based on whether the stylus is held by a user, whether the stylus is attached to the electronic device, or whether the stylus faces a speaking object, a microphone for capturing audio data, so that the electronic device can capture audio data from a shorter distance via the microphone of the electronic device, and capture audio data from a longer distance via the microphone of the stylus, thereby helping the user capture audio data in different call scenarios, and providing better call experience for the user.

## Description

This application claims priority to Chinese Patent Application No. 202410330913.3, filed with the China National Intellectual Property Administration on March 21, 2024 and entitled "CALL CONTROL METHOD, SYSTEM, AND RELATED APPARATUS", which is incorporated herein by reference in its entirety.

### TECHNICAL FIELD

This application relates to the terminal field, and in particular, to a call control method, a system, and a related apparatus.

### BACKGROUND

With popularization of electronic devices such as mobile phones and tablets, input manners of the electronic devices are increasingly diversified. Nowadays, a user usually uses a stylus as a common input device and performs operations such as tapping, drawing, and text entry on an electronic device via the stylus. However, current digital styluses are limited to a narrow set of application scenarios and provide relatively limited functions, failing to satisfy increasingly diverse use requirements of users.

### SUMMARY

This application provides a call control method, a system, and a related apparatus, thereby obtaining a status of a stylus when an electronic device starts to capture audio. Based on the status of the stylus, the electronic device captures audio data via a microphone of the electronic device and/or a microphone of the stylus. The electronic device determines, based on whether the stylus is held by a user, whether the stylus is attached to the electronic device, or whether the stylus faces a speaking object, a microphone for capturing audio data, so that the electronic device can capture audio data from a shorter distance via the microphone of the electronic device, and capture audio data from a longer distance via the microphone of the stylus, thereby helping the user capture audio data in different call scenarios, and providing better call experience for the user.

According to a first aspect, this application provides a call control method, applied to an electronic device including a first microphone, where the method includes: receiving a first input; and in response to the first input, capturing audio data via a second microphone of a stylus if it is detected that the stylus is held by a user; or capturing audio data via the first microphone if it is detected that the stylus is not held by the user. In this way, the electronic device selects, based on whether the stylus is held by the user, the first microphone or the second microphone to capture audio data. When the user moves or the user is relatively far away from the electronic device, the electronic device may capture clearer audio data via the stylus. The electronic device may further capture audio data of multiple users via the microphone of the electronic device when the multiple users are present. This is applicable to a scenario in which multiple users make a conference call via the electronic device.

In some examples, the first input is an input for starting to capture audio, for example, an input for answering/making a call or an input for starting recording. In this way, after receiving the input for starting to capture audio data, the electronic device obtains a status of the stylus, and selects a corresponding microphone.

In a possible implementation, the capturing audio data via the first microphone if it is detected that the stylus is not held by the user includes: if it is detected that the stylus is not held by the user and is attached to the electronic device, capturing audio data via the first microphone. In this way, when the electronic device detects that the stylus is attached to the electronic device, it indicates that the user does not use the stylus, and the microphone of the stylus may be blocked by the electronic device. The electronic device captures audio data via the first microphone, which better meets a requirement of the user for capturing audio, and can capture clearer audio.

In a possible implementation, the method further includes: if it is detected that the stylus is not held by the user and is not attached to the electronic device, suspending capturing audio data and displaying first prompt information, where the first prompt information is used to indicate to the user that the microphones are muted. In this way, when the stylus is idle, for example, when the stylus is placed on a table, the electronic device may tend to consider that the user wants to pause speaking. To protect privacy of the user, the electronic device may mute the microphone and suspend capturing audio data.

In some examples, the first prompt information may include a mute icon, and the mute icon may indicate that the electronic device is muted. In this way, the user may learn, via the mute icon, that the electronic device is muted, facilitating a subsequent unmuting operation to be performed by the user.

In a possible implementation, the capturing audio data via the second microphone of the stylus if it is detected that the stylus is held by the user includes: if it is detected that the stylus is held by the user and the stylus faces a speaking object, capturing audio data via the second microphone. In this way, when the stylus faces the speaking object, there is a relatively high probability that a distance between the microphone of the stylus and the speaking object is less than a distance between the microphone of the electronic device and the speaking object, and the electronic device may capture clearer audio data of the speaking object via the stylus.

In a possible implementation, the capturing audio data via the second microphone of the stylus if it is detected that the stylus is held by the user includes: if it is detected that the stylus is held by the user and the stylus does not face a speaking object, capturing audio data via the first microphone and the second microphone. In this way, when the stylus does not face the speaking object, a plurality of speaking objects near the electronic device may speak at will, and the electronic device may capture audio data of the nearby speaking objects via the first microphone and the second microphone together. When different speaking objects speak, relatively clear audio data may be captured.

In a possible implementation, the capturing audio data via the second microphone includes: capturing, via the second microphone, audio data in a direction of the speaking object that the stylus faces. In this way, when the stylus faces a speaking object, the electronic device may capture, via the second microphone, audio data in a direction in which the stylus faces. When the speaking object that the stylus faces speaks, audio data captured by the electronic device via the second microphone includes audio data of the speaking object that the stylus faces. In a single-person speaking scenario, the stylus may be used as a microphone to capture audio data of the speaking object.

In some examples, the electronic device sends the captured audio data to another electronic device that is in a call with the electronic device. The another electronic device plays the audio data.

In a possible implementation, after the suspending capturing audio data and displaying the first prompt information, the method further includes: receiving a first instruction sent by the stylus; and in response to the first instruction, canceling display of the first prompt information and continuing to capture audio data. In this way, when the electronic device suspends capturing audio data, the user may trigger, via the stylus, the electronic device to continue capturing audio data.

In a possible implementation, the method further includes: receiving a second instruction sent by the stylus; and adjusting volume of the electronic device in response to the second instruction. In this way, in a process of using the stylus, the user may adjust, via the stylus, volume of audio played by the electronic device, so that the user does not need to switch between operating devices, which is more convenient.

In a possible implementation, the method further includes: in response to the first input, displaying a call interface; receiving a third instruction sent by the stylus; and in response to the third instruction, ending a call and canceling display of the call interface. In this way, in a process of using the stylus, the user may trigger, via the stylus, the electronic device to end the call, so that the user does not need to switch between operating devices, which is more convenient.

In some examples, the method further includes: in response to the first input, displaying a recording control, where the recording control indicates that the electronic device is capturing audio; receiving a third instruction sent by the stylus; and in response to the third instruction, ending recording and canceling display of the recording control. In this way, in a process of using the stylus, the user may trigger, via the stylus, the electronic device to end recording or end voice capture, so that the user does not need to switch between operating devices, which is more convenient.

In a possible implementation, the method further includes: in response to the first input, sending a fourth instruction to the stylus, where the fourth instruction instructs the stylus to detect a status of the stylus; and receiving a first status sent by the stylus, where the first status includes one or more of being held by the user, not being held by the user, being attached to the electronic device, not being attached to the electronic device, facing a speaking object, and not facing a speaking object. In this way, after receiving the first input, the electronic device instructs the stylus, via the fourth instruction, to detect the status of the stylus. After receiving the first status of the stylus, the electronic device determines, based on the first status of the stylus, a microphone for capturing audio data.

According to a second aspect, this application provides a call control method, applied to a stylus including a second microphone, where the method includes: receiving a fourth instruction sent by an electronic device, where the fourth instruction instructs the stylus to detect a status of the stylus; sending a first status to the electronic device, where the first status includes one or more of being held by a user, not being held by the user, being attached to the electronic device, not being attached to the electronic device, facing a speaking object, and not facing a speaking object; if the first status indicates that the stylus is held by the user, receiving a fifth instruction sent by the electronic device; capturing audio data via the second microphone in response to the fifth instruction; and sending the audio data to the electronic device. In this way, after receiving the fourth instruction sent by the electronic device, the stylus may detect the status of the stylus, and feed back the status of the stylus to the electronic device. The electronic device may determine, based on the status of the stylus, a microphone to be used. When receiving the first status that indicates that the stylus is held by the user, the electronic device instructs, via the fifth instruction, the stylus to capture audio data. The stylus may send the captured audio data to the electronic device, and the electronic device may capture audio data.

In a possible implementation, if the first status indicates that the stylus is held by the user and the stylus faces the speaking object, the capturing audio data via the second microphone in response to the fifth instruction includes: capturing, via the second microphone, audio data in a direction of the speaking object that the stylus faces. In this way, when receiving the first status indicating that the stylus is held by the user and the stylus faces the speaking object, the electronic device instructs, via the fifth instruction, the stylus to capture audio data in the direction of the speaking object that the stylus faces. The stylus may send the captured audio data to the electronic device. When the speaking object makes a sound, audio data that may be captured by the electronic device includes audio data of the speaking object.

In a possible implementation, the method further includes: detecting a second input of the user; and in response to the second input, sending a first instruction to the electronic device, where the first instruction is used to trigger the electronic device to switch a microphone status, and the microphone status includes a muted state and a non-muted state. In this way, the stylus is configured to detect user input and trigger the electronic device to perform a corresponding operation. When the stylus is in use, the user may control the electronic device without performing switching operations on the electronic device, so that the user can operate the electronic device remotely.

In a possible implementation, the method further includes: detecting a third input of the user; and in response to the third input, sending a second instruction to the electronic device, where the second instruction is used to trigger the electronic device to adjust volume of the electronic device. In this way, when speaking via the stylus, the user may control, via the stylus, volume of audio played by the electronic device, so that the user can adjust the volume of the electronic device remotely.

In a possible implementation, the method further includes: detecting a fourth input of the user; and in response to the fourth input, sending a third instruction to the electronic device, where the third instruction is used to trigger the electronic device to end a call. In this way, the user may directly end the call via the stylus, and does not need to tap the electronic device when holding the stylus, thereby making the operation more convenient.

According to a third aspect, applied to a first communication system, the first communication system includes an electronic device and a stylus, the electronic device includes a first microphone, and the stylus includes a second microphone; and the method includes: the electronic device receives a first input; the electronic device sends, in response to the first input, a fourth instruction to the stylus, where the fourth instruction instructs the stylus to detect a status of the stylus; after receiving the fourth instruction, the stylus sends a first status to the electronic device in response to the fourth instruction; if the first status received by the electronic device indicates that the stylus is held by a user, sending a fifth instruction to the stylus; after receiving the fifth instruction, the stylus captures audio data via the second microphone in response to the fifth instruction; and if the first status received by the electronic device indicates that the stylus is not held by the user, capturing audio data via the first microphone. In this way, the first communication system can provide the user with more abundant audio capture scenarios, so that the user can conveniently capture required audio data.

In a possible implementation, if the first status received by the electronic device indicates that the stylus is not held by the user, audio data is captured via the first microphone. In this way, upon detecting that the stylus is not held by the user, the electronic device directly captures audio data via the first microphone.

In a possible implementation, if the first status received by the electronic device indicates that the stylus is not held by the user and is not attached to the electronic device, the electronic device suspends capturing audio data and displays first prompt information, where the first prompt information is used to indicate to the user that the microphones are muted. In this way, upon detecting that the stylus is attached to the electronic device, the electronic device suspends capturing audio data.

In a possible implementation, if the first status received by the electronic device indicates that the stylus is held by the user and the stylus faces a speaking object, the electronic device sends a sixth instruction to the stylus; after receiving the sixth instruction, the stylus captures audio data via the second microphone in response to the sixth instruction; and the stylus sends the audio data to the electronic device. In this way, upon detecting that the stylus is held by the user and that the stylus faces the speaking object, the electronic device instructs the stylus to capture audio data.

In a possible implementation, if the first status received by the electronic device indicates that the stylus is held by the user and the stylus faces the speaking object, the electronic device sends the sixth instruction to the stylus, including: if the first status received by the electronic device indicates that the stylus is held by the user and the stylus does not face the speaking object, capturing audio data via the first microphone, and sending the sixth instruction to the stylus. In this way, upon detecting that the stylus is held by the user and that the stylus does not face the speaking object, the electronic device instructs the stylus to capture audio data, while capturing audio data by itself.

In a possible implementation, after receiving the sixth instruction, the stylus captures audio data via the second microphone in response to the sixth instruction, including: capturing, via the second microphone, audio data in a direction of the speaking object that the stylus faces. In this way, the electronic device captures audio data of the speaking object via the stylus.

In a possible implementation, after the electronic device suspends capturing audio data and displays the first prompt information, the method further includes: the stylus receives a second input; the stylus sends, in response to the second input, a first instruction to the electronic device; and after receiving the first instruction, in response to the first instruction, the electronic device cancels display of the first prompt information and continues to capture audio data. In this way, when the electronic device suspends capturing audio data, the user may trigger, via the stylus, the electronic device to continue capturing audio data.

In a possible implementation, the method further includes: the stylus receives a third input of the user; the stylus sends, in response to the third input, a second instruction to the electronic device; and after receiving the second instruction, in response to the second instruction, the electronic device adjusts volume of the electronic device. In this way, when speaking via the stylus, the user may control, via the stylus, volume of audio played by the electronic device, so that the user can adjust the volume of the electronic device remotely.

In a possible implementation, the method further includes: the electronic device displays, in response to the first input, a call interface; the stylus receives a fourth input of the user; the stylus sends, in response to the fourth input, a third instruction to the electronic device; and after receiving the third instruction, in response to the third instruction, the electronic device cancels display of the call interface. In this way, the user may directly end the call via the stylus, and does not need to tap the electronic device when holding the stylus, thereby making the operation more convenient.

In some examples, the electronic device captures audio data via the first microphone and/or the second microphone. The method further includes: the stylus receives a fifth input; the stylus sends, in response to the fifth input, a seventh instruction to the electronic device; and after receiving the seventh instruction, in response to the seventh instruction, the electronic device displays the first prompt information and suspends capturing audio data. In this way, when the electronic device captures audio, the user may control, via the stylus, the electronic device to mute. In some examples, content of the first instruction is the same as content of the seventh instruction.

According to a fourth aspect, this application provides an electronic device, including: one or more processors and one or more memories, where the one or more memories are coupled to the one or more processors, the one or more memories are configured to store a computer-executable program, and when the one or more processors execute the computer-executable program, the electronic device is enabled to perform the method according to any one of the possible implementations of the first aspect.

According to a fifth aspect, this application provides a computer-readable storage medium, storing a computer program. When the computer program runs on a processor of an electronic device, the electronic device is enabled to perform the method according to any one of the possible implementations of the first aspect.

According to a sixth aspect, this application provides a computer program product. When the computer program product runs on an electronic device, the electronic device is enabled to perform the method according to any possible implementations of the first aspect.

According to a seventh aspect, this application provides a stylus, including: one or more processors and one or more memories, where the one or more memories are coupled to the one or more processors, the one or more memories are configured to store a computer-executable program, and when the one or more processors execute the computer-executable program, the stylus is enabled to perform the method according to any one of the possible implementations of the second aspect.

According to an eighth aspect, this application provides a computer-readable storage medium, storing a computer program. When the computer program runs on a processor of a stylus, the stylus is enabled to perform the method according to any one of the possible implementations of the second aspect.

According to a ninth aspect, this application provides a computer program product. When the computer program product runs on a stylus, the stylus is enabled to perform the method according to any one of the possible implementations of the second aspect.

### BRIEF DESCRIPTION OF DRAWINGS

FIG. 1 is a diagram of a hardware structure of an electronic device according to an embodiment of this application;
FIG. 2 is a diagram of a hardware structure of a stylus according to an embodiment of this application;
FIG. 3 is a diagram of a communication system 10 according to an embodiment of this application;
FIG. 4 is a schematic flowchart of a call control method according to an embodiment of this application;
FIG. 5 is a schematic flowchart of another call control method according to an embodiment of this application;
FIG. 6A to FIG. 6E are diagrams of a group of scenarios according to an embodiment of this application;
FIG. 7A to FIG. 7C are diagrams of another group of scenarios according to an embodiment of this application; and
FIG. 8A and FIG. 8B are diagrams of another group of scenarios according to an embodiment of this application.

### DESCRIPTION OF EMBODIMENTS

The technical solutions according to embodiments of this application are clearly and completely described in the following with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, or only B exists. In addition, in the descriptions of embodiments of this application, "a plurality of" means two or more.

In the following descriptions, the terms "first" and "second" are merely intended for a purpose of description, and shall not be interpreted as an implication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

The following describes a diagram of a hardware structure of an electronic device 100 according to an embodiment of this application.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), augmented reality (augmented reality, AR) device, virtual reality (virtual reality, VR) device, artificial intelligence (artificial intelligence, AI) device, wearable device, in-vehicle device, smart home device, and/or smart city device. A specific type of the electronic device is not limited in the embodiment of this application.

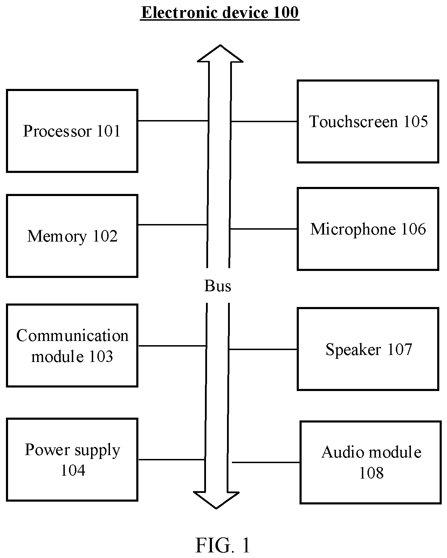

FIG. 1 is a diagram of a hardware structure of the electronic device 100. The electronic device 100 may include but is not limited to a processor 101, a memory 102, a communication module 103, a power supply 104, a touchscreen 105, one or more microphones 106, one or more speakers 107, an audio module 108, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 101 may include one or more processing units. For example, the processor 101 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction opcode and a timing signal, to complete control of instruction fetching and instruction execution.

A memory may be further disposed in the processor 101, and is configured to store instructions and data. In some embodiments, the memory in the processor 101 is a cache. The memory may store instructions or data just used or cyclically used by the processor 101. If the processor 101 needs to use the instructions or the data again, the processor may directly invoke the instructions or the data from the memory. This avoids repeated access and reduces a waiting time of the processor 101, thereby improving system efficiency.

In some embodiments, the processor 101 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The memory 102 is coupled to the processor 101 and configured to store various software programs and/or a plurality of sets of instructions. In a specific implementation, the memory 102 may include a high-speed random access memory, and may also include a nonvolatile memory, such as one or more magnetic disk storage devices, a flash storage device, or another nonvolatile solid-state storage device. The memory 102 may store an operating system, for example, an embedded operating system such as uCOS, VxWorks, or RTLinux. The memory 102 may further store a communication program, and the communication program may be configured to communicate with a stylus 200 or another device.

The communication module 103 may be configured to communicate with another electronic device (for example, the stylus 200). For example, the communication module 103 may be configured to receive audio data sent by the stylus 200.

The power supply 104 may supply power to the electronic device 100. For example, the power supply 104 may be a rechargeable lithium battery, a replaceable standard battery, or the like. The power supply 104 may provide power required by components such as the processor 101, the memory 102, the communication module 103, and the touchscreen 105.

The touchscreen 105 may include a display and a touch sensor. The display is configured to display an image, a video, and the like. The display includes a display panel. The display panel may be a liquid crystal display (liquid crystal display, LCD). The display panel may alternatively be an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays, where N is a positive integer greater than 1. The touch sensor is also referred to as a "touch panel". The touch sensor may be configured to detect a movement operation of the stylus 200 acting on the touchscreen 105. The touch sensor may transmit the detected movement operation to an application processor to determine a movement trace of the stylus 200, so that the application processor can provide visual output related to touch operations via the display.

The electronic device 100 may implement an audio function via the microphone 106, the speaker 107, the audio module 108, the processor 101, and the like. The one or more microphones 106 may be configured to capture audio data. The one or more speakers 107 may be configured to play audio data.

The audio module 108 is configured to convert digital audio information into an analog audio signal for output, and is also configured to convert an analog audio input into a digital audio signal. The audio module 108 may be further configured to encode and decode an audio signal. In some examples, the audio module 108 may be disposed in the processor 101, or some functional modules in the audio module 108 are disposed in the processor 101.

The microphone 106, also referred to as a "mike" or a "mic", is configured to convert a sound signal into an electrical signal. When making a call, sending voice information, or recording, a user may make a sound with the mouth near the microphone 106, to input a sound signal to the microphone 106. Two microphones 106 may be disposed in the electronic device 100, and in addition to capturing sound signals, the electronic device 100 may further implement a noise cancellation function. In some examples, three, four, or more microphones 106 may alternatively be disposed in the electronic device 100, to capture sound signals, implement noise cancellation, and identify a sound source, to implement a directional recording function and the like.

The speaker 107, also referred to as a "loudspeaker", is configured to convert an audio electrical signal into a sound signal. The electronic device 100 may listen to music, listen to a hands-free call, listen to a conference call, and the like via the speaker 107.

The following describes a diagram of a hardware structure of a stylus 200 according to an embodiment of this application.

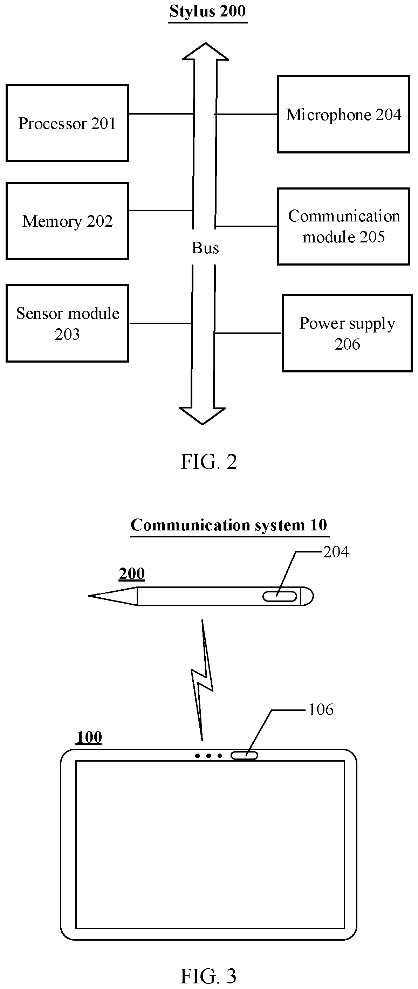

As shown in FIG. 2, the stylus 200 may include but is not limited to a processor 201, a memory 202, a sensor module 203, one or more microphones 204, a communication module 205, a power supply 206, and the like.

The processor 201 may be configured to fetch and execute computer-readable instructions. In a specific implementation, the processor 201 may mainly include a controller, an arithmetic unit, and a register. The controller mainly decodes instructions and sends a control signal for an operation corresponding to the instructions. The arithmetic unit is mainly responsible for saving register operands, intermediate operation results, and the like that are temporarily stored during instruction execution. In a specific implementation, a hardware architecture of the processor 201 may be an application-specific integrated circuit (ASIC) architecture, a MIPS architecture, an ARM architecture, an NP architecture, or the like.

The processor 201 may be configured to parse a signal received by the communication module 205. The processor 201 may make a response based on a parsing result, and perform a corresponding operation. For example, based on a signal sent by the electronic device 100, the processor 201 may capture audio data via the microphone 204, and the like. The processor 201 may be further configured to notify the communication module 205 to send a signal to another electronic device. For example, the processor 201 may send, via the communication module 205, audio data captured by the microphone 204 to the electronic device 100, and the like.

The memory 202 is coupled to the processor 201 and configured to store various software programs and/or a plurality of sets of instructions. In a specific implementation, the memory 202 may include a high-speed random access memory, and may also include a nonvolatile memory, such as one or more disk storage devices, a flash storage device, or another nonvolatile solid-state storage device. The memory 202 may store an operating system, for example, an embedded operating system such as uCOS, VxWorks, or RTLinux. The memory 202 may further store a communication program, and the communication program may be configured to communicate with the electronic device 100 or another device.

The sensor module 203 may include but is not limited to an ultrasonic sensor 203A (not shown in the figure), a pressure sensor 203B (not shown in the figure), and the like. In this embodiment of this application, the stylus 200 may determine, via the sensor module 203, whether a user holds the stylus 200, and the stylus 200 may further identify a gesture of the user or the like via the sensor module 203.

In some examples, the stylus 200 may identify, via the ultrasonic sensor 203A, whether the user holds the stylus 200. The ultrasonic sensor 203A may be located on a body portion of the stylus 200, and the ultrasonic sensor 203A may emit ultrasonic waves and receive the ultrasonic waves reflected by an obstacle. The stylus 200 may detect, based on the received ultrasonic waves, whether the ultrasonic sensor 203A is blocked. When the ultrasonic sensor 203A is blocked, the ultrasonic waves emitted by the ultrasonic sensor 203A are reflected, and the ultrasonic sensor 203A may receive the reflected ultrasonic waves. Therefore, energy of the ultrasonic waves received by the blocked ultrasonic sensor 203A is greater than energy of the ultrasonic waves received by the unblocked ultrasonic sensor 203A. Upon detecting that the ultrasonic sensor 203A disposed near a pen tip is blocked, the stylus 200 may determine that the stylus 200 is held by the user. Upon detecting that the ultrasonic sensor 203A disposed near the pen tip is not blocked, the stylus 200 may determine that the stylus 200 is not held by the user.

In some examples, the stylus 200 may further identify a gesture of the user via the ultrasonic sensor 203A. For example, the stylus 200 may identify a single-tap input, a double-tap input, a touch-and-hold input, and the like based on duration for which the ultrasonic sensor 203A is blocked by the user. For another example, the stylus 200 includes a plurality of ultrasonic sensors 203A, and the plurality of ultrasonic sensors 203A are located at different positions on a body of the stylus 200. The stylus 200 may identify a slide-up input, a slide-down input, and the like based on a sequence in which the different ultrasonic sensors 203A are blocked.

In some examples, the stylus 200 may identify, via the pressure sensor 203B, whether the stylus 200 is held by the user. For example, the pressure sensor 203B may be located on a body portion of the stylus 200, and the pressure sensor 203B may detect, based on a pressure value applied to the pressure sensor 203B, whether the user presses the pressure sensor 203B, that is, whether the user holds the stylus 200.

In some examples, the stylus 200 may further identify a gesture of the user via the pressure sensor 203B, for example, a single-tap gesture, a double-tap gesture, or a touch-and-hold gesture. For example, the pressure sensor 203B may be located at a pen tail portion of the stylus 200 (also referred to as a top of the stylus 200), and may be configured to detect whether the user performs input on the top of the stylus 200.

In some examples, the pressure sensor 203B may be disposed on a pen tip of the stylus 200, and the pressure sensor 203B may be configured to detect pressure sensed by the pen tip. The pressure sensor 203B may send detected pressure data to the processor 201. The processor 201 may control, based on the pressure data, the communication module 205 to send different signals, thereby instructing the electronic device 100 to display strokes of different thicknesses at a position where the pen tip of the stylus 200 passes on the touchscreen.

It should be noted that, without being limited to the ultrasonic sensor 203A, the stylus 200 may include a speaker. The stylus 200 may emit ultrasonic waves via the speaker, receive, via the microphone 204, the ultrasonic waves emitted by the speaker, detect whether the user holds the stylus 200, and identify a gesture of the user. Alternatively, the stylus 200 may include a touch sensor. The stylus 200 may detect, via the touch sensor, whether the user holds the stylus 200, identify a gesture of the user on the stylus 200, and the like. This is not limited in this embodiment of this application.

In some examples, the stylus 200 may further detect whether the stylus 200 faces a specified object. The specified object may be a speaking object near the stylus 200. For example, the stylus 200 may determine a relative position relationship between the speaking object and the stylus 200 via a near-field and far-field recognition technology. The stylus 200 may capture sound signals via a plurality of microphones 204, and determine directions of different sound sources relative to the stylus 200 based on time differences in capturing the same sound signal by different microphones, that is, determine directions of different speaking objects relative to the stylus 200. For another example, the stylus 200 may recognize a contour of each nearby object via the ultrasonic sensor 203A, and recognize, via an algorithm, whether the contour of the object belongs to the speaking object. Subsequently, the stylus 200 may further determine a direction of a person relative to the stylus 200 via the ultrasonic sensor 203A, and the like. For another example, the stylus 200 may determine, via the plurality of microphones 204 and the ultrasonic sensor 203A, whether the stylus 200 faces the specified object. The stylus 200 may determine directions of different sound sources relative to the stylus 200 via the plurality of microphones, and determine, via the ultrasonic sensor 203A, whether an obstruction exists in the directions of the different sound sources.

The stylus 200 may obtain a posture of the stylus 200 via a gyroscope or an acceleration sensor. The stylus 200 may detect, based on the posture of the stylus 200 and a relative direction relationship between a speaking object and the stylus 200, whether the stylus 200 faces the speaking object.

In some examples, when the stylus 200 faces a direction of a specified object, audio data in a direction of the specified object that the stylus 200 faces may be captured. In this way, when the specified object makes a sound, the stylus 200 may capture audio data including a sound signal from the specified object that the stylus 200 faces. In a single-person speaking scenario, the stylus 200 may thereby capture clear speech of the speaking object indicated by the stylus 200.

The stylus 200 may capture, via a directional sound pickup technology, audio data in the direction of the specified object that the stylus 200 faces. Alternatively, the stylus 200 may adjust a recording range of the microphone 204, and capture audio data in the direction of the specified object that the stylus 200 faces. Alternatively, the stylus 200 may identify audio data of the specified object that the stylus 200 faces. After capturing audio data via the microphone 204, the stylus 200 may select, from the captured audio data, audio data of the specified object that the stylus 200 faces. In some examples, the stylus 200 may detect a distance between a specified object that the stylus 200 faces and the stylus 200, and set the recording range to a range in which the stylus 200 is used as a center and the distance of the specified object pointed to by the stylus 200 relative to the stylus 200 is a radius, so that the stylus 200 can capture audio data of the specified object when the specified object makes a sound.

The one or more microphones 204 may be configured to capture audio data. The microphone 204, also referred to as a "mike" or a "mic", is configured to convert a sound signal into an electrical signal. When making a call or sending voice information, a user may make a sound with the mouth near the microphone 204, to input a sound signal to the microphone 204. At least one microphone 204 may be disposed in the electronic device 100. In some examples, two microphones 204 may be disposed in the electronic device 100, to capture a sound signal and further implement a noise cancellation function. In some other examples, three, four, or more microphones 204 may alternatively be disposed in the electronic device 100, to capture a sound signal, implement noise cancellation, and identify a sound source, to implement a directional recording function and the like.

The communication module 205 may be configured to communicate with the electronic device 100. The communication module 205 may send audio data captured by one or more microphones 204 to the electronic device 100. The communication module 205 may further include a transmitter. The transmitter is located at a pen tip portion of the stylus 200, and may be configured to output a signal that can be detected by the touchscreen of the electronic device 100. The electronic device 100 may determine, based on the signal that is detected by the touchscreen and that is transmitted by the transmitter, a position of the pen tip of the stylus 200 on the touchscreen of the electronic device 100. The electronic device 100 may further detect, based on a signal sent by the transmitter of the stylus 200, a tilt angle and a tilt direction of the pen tip of the stylus 200.

The power supply 206 may supply power to the stylus 200. For example, the power supply 206 may be a rechargeable lithium battery, a replaceable standard battery, or the like. The power supply 206 may provide power required by components such as the processor 201, the memory 202, the sensor module 203, the one or more microphones 204, and the communication module 205 of the stylus 200.

Optionally, the stylus 200 may further include a speaker (not shown in the figure), and the stylus 200 may play audio data via the speaker.

The following describes a diagram of a communication system 10 according to an embodiment of this application.

For example, as shown in FIG. 3, the communication system 10 may include but is not limited to an electronic device 100 and a stylus 200. The electronic device 100 establishes a communication connection to the stylus 200. The communication connection may be a wireless connection, for example, a connection in a manner such as a wireless fidelity (wireless fidelity, Wi-Fi) connection, a Bluetooth connection, an infrared connection, a near field communication (near field communication, NFC) connection, or a ZigBee connection, or a connection in a manner such as a mobile network of 2G, 3G, 4G, 5G, or a subsequent standard protocol. The Bluetooth connection may be a communication connection that supports a Bluetooth low energy (Bluetooth low energy, BLE) protocol or a classic Bluetooth (also referred to as a basic rate/enhanced data rate (basic rate/enhanced data rate, BR/EDR) technology) protocol. In some examples, the communication connection may also be a wired connection. For example, the stylus 200 may be connected to the electronic device 100 via a data line, and transmit communication data via the data line.

The electronic device 100 may detect an input of the stylus 200 on the touchscreen, and perform an operation corresponding to the input of the stylus 200. For example, the electronic device 100 may display, in response to an input of the stylus 200 for an icon, an interface corresponding to the icon. For another example, the electronic device 100 may display, in response to a movement input of the stylus 200 on the touchscreen, a movement trace of the stylus 200. In this way, a user may control the electronic device 100 via the stylus 200.

The stylus 200 includes one or more microphones 204, and the one or more microphones 204 may be configured to capture audio data. The electronic device 100 includes one or more microphones 106, and the one or more microphones 106 may also be configured to capture audio data.

In this embodiment of this application, during a call, the electronic device 100 may detect a status of the stylus 200. The electronic device 100 may determine, based on the status of the stylus 200, to capture audio data via the microphone 204 and/or the microphone 106.

In some examples, the stylus 200 may be attached to a side of the electronic device 100. For example, the stylus 200 may include a magnetic attachment apparatus (for example, a magnet), and the stylus 200 may be attached to the electronic device 100 via the magnetic attachment apparatus. The electronic device 100 and/or the stylus 200 may detect whether the stylus 200 is attached to the electronic device 100. For example, the electronic device 100 and/or the stylus 200 may include a magnetometer, and the magnetometer may be configured to detect whether the stylus 200 is attached to the electronic device 100. Optionally, when the stylus 200 is attached to a side of the electronic device 100, the electronic device 100 may charge the stylus 200 via a wireless charging technology.

An embodiment of this application provides a call control method. After receiving an input of a user, an electronic device 100 may, in response to the input, detect a status of a stylus 200. The electronic device 100 may determine, based on the status of the stylus 200, to capture audio data via a microphone of the electronic device 100 and/or a microphone of the stylus 200. The status of the stylus 200 may indicate whether the stylus 200 is held by the user and whether the stylus 200 faces a specified object. The specified object is a speaking object near the stylus 200. In this way, the electronic device 100 may more flexibly capture, based on the stylus 200, audio data of different speaking objects in a call scenario, so that the electronic device 100 can obtain clearer audio data.

Specifically, upon detecting that the stylus 200 is not held by the user, the electronic device 100 may capture audio data via the microphone of the electronic device 100. Upon detecting that the stylus 200 is held by the user, the electronic device 100 may detect whether the microphone of the stylus 200 faces the specified object. Upon detecting that the microphone of the stylus 200 faces the specified object, the electronic device 100 captures audio data via the microphone of the stylus 200. Upon detecting that the microphone of the stylus 200 does not face the specified object, the electronic device 100 may use the microphone of the electronic device 100 and the microphone of the stylus 200 to jointly capture audio data.

In this way, when the user holds the stylus 200, a distance between the stylus 200 and the sound emitting part of the user is usually less than a distance between the electronic device 100 and the sound emitting part of the user. The electronic device 100 captures audio data via the microphone of the stylus 200, so that a clearer sound signal can be captured from a shorter distance. When the user does not hold the stylus 200, it may be considered that the user does not want to use the stylus 200 temporarily, and the electronic device 100 may capture audio data via the microphone of the electronic device 100. When the stylus 200 points to the specified object, the electronic device 100 may capture audio data of the specified object via the microphone of the stylus 200, so that the electronic device 100 can obtain clearer speech of the specified object. When the stylus 200 does not point to the specified object, the electronic device 100 captures nearby audio data via the microphone of the electronic device 100 and the microphone of the stylus 200, to implement a hands-free call effect. The electronic device 100 may implement audio capture functions in a plurality of call scenarios via the stylus 200, thereby bringing a more intelligent and convenient call experience to the user.

It may be understood that, after capturing audio data, the electronic device 100 may send the audio data to a device that is in a call with the electronic device 100. The device that is in a call with the electronic device 100 may play the audio data.

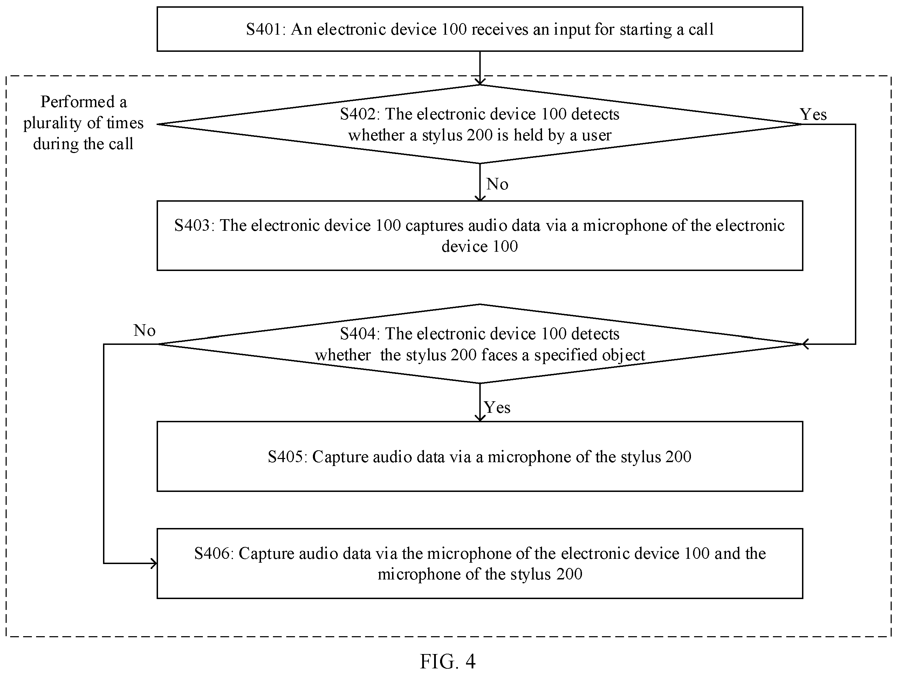

For example, as shown in FIG. 4, a call control method provided in an embodiment of this application includes the following steps.

S401: An electronic device 100 receives an input for starting a call.

After receiving the input for starting a call, the electronic device 100 may perform steps S402 to S406 a plurality of times during the call. The input for starting a call may be an input for making/answering a call, an input for joining a conference call (also referred to as joining a conference), an input for making/answering a video call, an input for making/answering a voice call, or the like.

It should be noted that the performing steps S402 to S406 the plurality of times during the call may be understood as meaning that the electronic device 100 may detect a status of a stylus 200 in real time during the call, and set, based on the status of the stylus 200, a microphone for capturing audio data. In some examples, the detecting, by the electronic device 100, the status of the stylus 200 in real time during the call may be understood as meaning that the electronic device 100 detects a status of the stylus 200 every preset time interval (for example, 10 ms), and sets, based on the status of the stylus 200, a microphone for capturing audio data. This is not limited in this embodiment of this application.

S402: The electronic device 100 detects whether a stylus 200 is held by a user.

After receiving the input for starting a call, the electronic device 100 may detect whether the stylus 200 is held by the user. The electronic device 100 may perform step S403 upon detecting that the stylus 200 is not held by the user. The electronic device 100 may perform step S404 upon detecting that the stylus 200 is held by the user.

The electronic device 100 may obtain state information from the stylus 200, and detect, based on the obtained state information, whether the stylus 200 is held by the user.

In some examples, the state information may indicate whether the stylus 200 is held by the user and whether the stylus 200 faces a specified object. The stylus 200 may detect, via an ultrasonic sensor 203A and/or a pressure sensor 203B, whether the stylus 200 is held by the user. The stylus 200 may detect, via the ultrasonic sensor 203A or a microphone 204, whether the stylus 200 faces the specified object. For details, refer to the embodiment shown in FIG. 2. Details are not described herein again.

In some examples, the state information may include sensor data obtained by a sensor module 203 of the stylus 200. For example, the state information may include ultrasonic data received by the ultrasonic sensor 203A, or pressure data detected by the pressure sensor 203B. The ultrasonic data or the pressure data may indicate whether the stylus 200 is held by the user. The state information may further include ultrasonic data received by the ultrasonic sensor 203A, or audio data received by the microphone 204. The ultrasonic data or the audio data may indicate whether the stylus 200 faces the specified object.

In some examples, the electronic device 100 may send an instruction 41 to the stylus 200, and the stylus 200 may, in response to the instruction 41, obtain state information and send the state information to the electronic device 100. The instruction 41 may indicate to the stylus 200 that the electronic device 100 starts a call, or the instruction 41 may be used to instruct the stylus 200 to obtain state information of the stylus 200 and send the state information to the electronic device 100.

In some other examples, after receiving the input for starting a call, the electronic device 100 may detect whether the electronic device 100 establishes a communication connection to the stylus 200. The electronic device 100 may perform steps S402 to S406 upon detecting that the electronic device 100 establishes a communication connection to the stylus 200. Upon detecting that no communication connection is established between the electronic device 100 and the stylus 200, the electronic device 100 may capture audio data via a microphone of the electronic device 100.

It may be understood that, after receiving an input for ending the call, the electronic device 100 stops performing steps S402 to S406.

S403: The electronic device 100 captures audio data via a microphone of the electronic device 100.

Upon detecting that the stylus 200 is not held by the user, the electronic device 100 may capture audio data via the microphone of the electronic device 100. In this way, the electronic device 100 may capture audio data of a plurality of nearby speaking objects, so that the plurality of speaking objects can simultaneously participate in a call, thereby implementing a hands-free call effect.

S404: The electronic device 100 detects whether the stylus 200 faces a specified object.

Upon detecting that the stylus 200 is held by the user, the electronic device 100 may detect whether the stylus 200 faces the specified object. The electronic device 100 may perform step S405 upon detecting that the stylus 200 faces the specified object. The electronic device 100 may perform step S406 upon detecting that the stylus 200 does not face the specified object.

It should be noted that, the electronic device 100 is not limited to first detecting whether the stylus 200 is held by the user, and then detecting whether the stylus 200 faces the specified object upon detecting that the user is held by the user. The electronic device 100 may instruct the stylus to send, to the electronic device 100, state information indicating whether the stylus is held by the user and whether the stylus faces the specified object. Upon determining that the state information indicates that the stylus 200 is not held by the user, the electronic device 100 performs step S403. Upon determining that the state information indicates that the stylus 200 is held by the user and faces the specified object, the electronic device 100 performs step S405. Upon determining that the state information indicates that the stylus 200 is held by the user and does not face the specified object, the electronic device 100 performs step S406. In this way, the electronic device 100 may directly determine, based on the state information, a microphone to be used.

S405: The electronic device 100 captures audio data via a microphone of the stylus 200.

Upon detecting that the stylus 200 faces the specified object, the electronic device 100 may capture audio data via the microphone of the stylus 200. In this way, when the stylus 200 faces the specified object, a distance between the microphone of the stylus 200 and the specified object is more likely to be shorter than a distance between the microphone of the electronic device 100 and the specified object. The stylus 200 may function as a microphone in this scenario, facilitating speech input from different specified objects.

In some examples, the electronic device 100 may capture, via the microphone of the stylus 200, audio data in a direction of the specified object that the stylus 200 faces. For details, refer to the embodiment shown in FIG. 2. Details are not described herein again. In this way, the electronic device 100 captures audio data in the direction of the specified object that the stylus 200 faces, so that when the specified object that the stylus 200 faces speaks, interference from a sound of a speaking object in another direction around the stylus 200 can be reduced.

S406: The electronic device 100 captures audio data via the microphone of the electronic device 100 and the microphone of the stylus 200.

Upon detecting that the stylus 200 does not face the specified object, the electronic device 100 may capture audio data via the microphone of the electronic device 100 and the microphone of the stylus 200. In this way, the electronic device 100 captures audio data via the microphone of the electronic device 100 and the microphone of the stylus 200, so that clearer audio data can be captured. In addition, when the stylus 200 does not face the specified object, it may be considered to be a multi-person speaking scenario, and the electronic device 100 may capture all nearby audio data, to avoid missing information.

It may be understood that, after capturing audio data, the electronic device 100 may send the audio data to another electronic device that is in a call with the electronic device 100.

In some examples, after receiving the input for starting a call, the electronic device 100 may instruct the stylus 200 to obtain state information. After obtaining the state information of the stylus 200, the electronic device 100 may detect, based on the state information, whether the stylus 200 is held by the user and whether the stylus 200 faces the specified object. When the state information indicates that the stylus 200 is not held by the user, the electronic device 100 captures audio data via the microphone of the electronic device 100. When the state information indicates that the stylus 200 is held by the user and faces the specified object, the electronic device 100 instructs the stylus 200 to capture audio data. The stylus 200 may send the captured audio data to the electronic device 100. When the state information indicates that the stylus 200 is not held by the user and does not face the specified object, the electronic device 100 captures audio data via the microphone of the electronic device 100 and instructs the stylus 200 to capture audio data.

In some other examples, upon detecting that the stylus 200 is not held by the user, the electronic device 100 may capture audio data via the microphone of the electronic device 100. Upon detecting that the stylus 200 is held by the user, the electronic device 100 may capture audio data via the microphone of the stylus 200. In this way, the electronic device 100 may directly select a corresponding microphone based on whether the stylus 200 is held by the user.

It should be noted that, without being limited to a call scenario, when the electronic device 100 is in a scenario such as recording or receiving a voice input, steps S402 to S406 may be performed a plurality of times to capture audio data. In this way, by using the call control method, the electronic device 100 may be applicable to more diversified audio capture scenarios, to provide different audio capture experiences for the user.

In some other examples, upon detecting that the stylus 200 is attached to the electronic device 100, the electronic device 100 may capture audio data via the microphone of the electronic device 100. Upon detecting that the stylus 200 is held by the user, the electronic device 100 may capture audio data via the microphone of the stylus 200. Upon detecting that the stylus 200 is not attached to the electronic device 100 and is not held by the user, the electronic device 100 may suspend capturing audio data and display mute prompt information, where the mute prompt information may be used to indicate to the user that the microphone of the electronic device 100 has been turned off.

In this way, when the user holds the stylus 200, a distance between the stylus 200 and the sound emitting part of the user is usually less than a distance between the electronic device 100 and the sound emitting part of the user. The electronic device 100 captures audio data via the microphone of the stylus 200, so that a clearer sound signal can be captured from a shorter distance. When the user attaches the stylus 200 to the electronic device 100, it may be considered that the user does not want to use the stylus 200 temporarily, and the electronic device 100 may capture audio data via the microphone of the electronic device 100. When the user does not hold the stylus 200 and does not attach the stylus 200 to the electronic device 100, it may be considered that the user wants to suspend capturing audio, and the electronic device 100 may suspend performing an operation of capturing audio data via a microphone. The electronic device 100 may, via the microphone of the electronic device 100 and the microphone of the stylus 200, jointly capture audio of the user during a call.

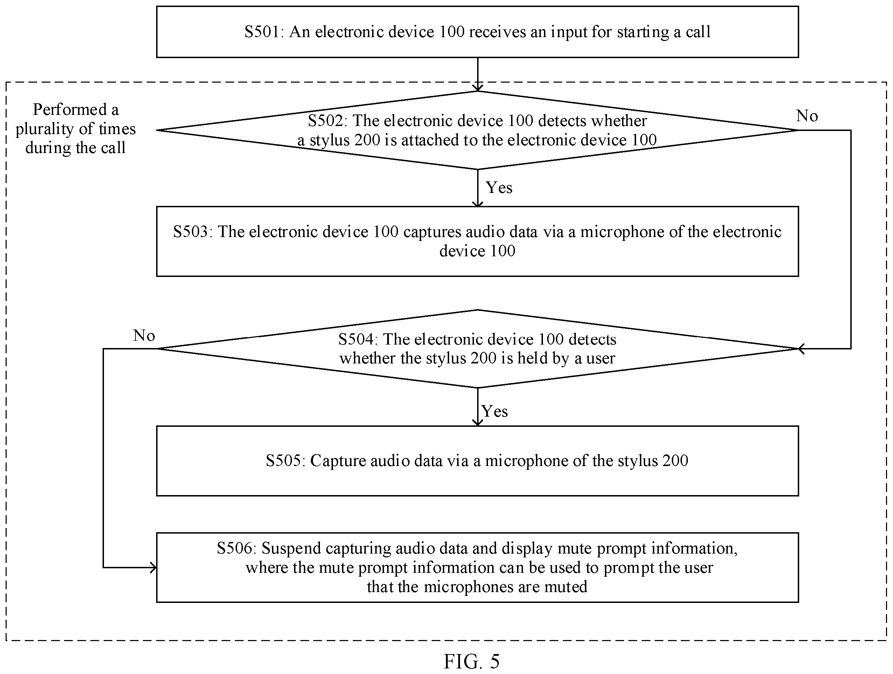

For example, as shown in FIG. 5, a call control method provided in an embodiment of this application includes the following steps.

S501: An electronic device 100 receives an input for starting a call.

S502: The electronic device 100 detects whether a stylus 200 is attached to the electronic device 100.

After receiving the input for starting a call, the electronic device 100 may detect whether the stylus 200 is attached to the electronic device 100. Upon detecting that the stylus 200 is attached to the electronic device 100, the electronic device 100 may perform step S503. Upon detecting that the stylus 200 is not attached to the electronic device 100, the electronic device 100 may perform step S504. For a description of the electronic device 100 detecting whether the stylus 200 is attached to the electronic device 100, refer to the embodiment shown in FIG. 3. Details are not described herein again. During a call, the electronic device 100 may perform steps S502 to S506 a plurality of times.

S503: The electronic device 100 captures audio data via a microphone of the electronic device 100.

Upon detecting that the stylus 200 is attached to the electronic device 100, the electronic device 100 may capture audio data via the microphone of the electronic device 100.

S504: The electronic device 100 detects whether the stylus 200 is held by a user.

Upon detecting that the stylus 200 is not attached to the electronic device 100, the electronic device 100 may detect whether the stylus 200 is held by the user. Upon detecting that the stylus 200 is held by the user, the electronic device 100 may perform step S505. Upon detecting that the stylus 200 is not held by the user, the electronic device 100 may perform step S506. Specifically, for a description of the electronic device 100 detecting whether the stylus 200 is held by the user, refer to the embodiment shown in FIG. 4. Details are not described herein again.

S505: The electronic device 100 captures audio data via a microphone of the stylus 200.

The electronic device 100 detects that the stylus 200 is held by the user, and captures audio data via the microphone of the stylus 200.

In some examples, upon detecting that the stylus 200 is held by the user, the electronic device 100 may further detect whether the stylus 200 faces a specified object. Upon detecting that the stylus 200 faces the specified object, the electronic device 100 may capture, via the microphone of the stylus 200, audio data in a direction of the specified object. Upon detecting that the stylus 200 does not face the specified object, the electronic device 100 may capture nearby audio data via the microphone of the stylus 200, or capture nearby audio data via the microphone of the electronic device 100 and the microphone of the stylus 200.

S506: The electronic device 100 suspends capturing audio data and displays mute prompt information, where the mute prompt information may be used to indicate to the user that the microphones are muted.

Upon detecting that the stylus 200 is not held by the user and is not attached to the electronic device 100, the electronic device 100 suspends capturing audio data and displays mute prompt information. The mute prompt information may include but is not limited to text prompt information, voice prompt information, image prompt information, animation prompt information, and the like. For example, the mute prompt information may include text prompt information: "The microphone is currently muted". In this way, the user may trigger the electronic device 100 to mute by placing the stylus 200 aside, for example, placing the stylus 200 on a table, so that when the user does not want to speak, the voice of the user is not heard by a call counterpart.

It may be understood that, in a process in which the electronic device 100 captures audio data via the microphone of the stylus 200, upon detecting that the stylus 200 is not held by the user and is not attached to the electronic device 100, the electronic device 100 instructs the stylus 200 to stop capturing audio data.

It should be noted that, the electronic device 100 is not limited to first detecting that the stylus 200 is attached to the electronic device 100, and then detecting whether the stylus 200 is held by the user upon detecting that the stylus 200 is not attached to the electronic device 100. The electronic device 100 may instruct the stylus to send, to the electronic device 100, state information indicating whether the stylus is held by the user and whether the stylus 200 is attached to the electronic device. Upon determining that the state information indicates that the stylus 200 is attached to the electronic device 100, the electronic device 100 performs step S503. Upon determining that the state information indicates that the stylus 200 is not attached to the electronic device 100 and is held by the user, the electronic device 100 performs step S505. Upon determining that the state information indicates that the stylus 200 is not attached to the electronic device 100 and is not held by the user, the electronic device 100 performs step S506. In this way, the electronic device 100 may directly determine, based on the state information, a microphone to be used. Similarly, the state information may include one or more of the following: whether the stylus 200 is held by the user, whether the stylus 200 is attached to the electronic device, and whether the stylus 200 faces the specified object. The electronic device 100 may determine, based on the state information, a microphone to be used. For details, refer to the foregoing embodiments. Details are not described herein again.

It should be noted that, the electronic device 100 is not limited to a call scenario, and when the electronic device 100 is in a scenario such as recording or receiving a voice input, the electronic device 100 may also capture audio data by performing steps S502 to S506 a plurality of times.

In some examples, when the stylus 200 cannot be attached to the electronic device 100, after receiving the input for starting a call, the electronic device 100 may detect whether the stylus 200 is within a preset range and whether the stylus 200 is not held by the user. Upon detecting that the stylus 200 is within the preset range and is not held by the user, the electronic device 100 may capture audio data via the microphone of the electronic device 100. Upon detecting that the stylus 200 is within the preset range and is held by the user, the electronic device 100 may capture audio data via the microphone of the stylus 200. Upon detecting that the stylus 200 is outside the preset range, the electronic device 100 may suspend capturing audio data and display mute prompt information. The preset range may be a range that includes the electronic device 100 and of which the distance from an edge of the electronic device 100 is less than a preset distance (for example, 2 cm). For example, the electronic device 100 may detect, via an ultrasonic sensor 203A of the stylus 200, a distance between the stylus 200 and an edge of the electronic device 100. In this way, when the stylus 200 cannot be attached to the electronic device 100, the user may also place the stylus 200 within the preset range of the electronic device 100, for example, place the stylus 200 above the electronic device 100, so that the user can switch between different audio capture manners.

In some other examples, when the stylus 200 cannot be attached to the electronic device 100, after receiving the input for starting a call, the electronic device 100 may detect whether the stylus 200 is held by the user. Upon detecting that the stylus 200 is held by the user, the electronic device 100 performs step S505. Upon detecting that the stylus 200 is not held by the user, the electronic device 100 may capture audio data via the microphone of the electronic device 100, or suspend capturing audio data and display mute prompt information. In this way, the user may change a manner of capturing audio data based on whether the stylus 200 is held.

Optionally, when the stylus 200 cannot be attached to the electronic device 100, after receiving the input for starting a call, the electronic device 100 may detect whether the electronic device 100 establishes a communication connection to the stylus 200. Upon detecting that no communication connection is established between the electronic device 100 and the stylus 200, the electronic device 100 may capture audio data via the microphone of the electronic device 100. Upon detecting that the electronic device 100 establishes a communication connection to the stylus 200, the electronic device 100 may detect whether the stylus 200 is held by the user. For details, refer to the foregoing embodiments. Details are not described herein again.

In some other examples, upon detecting that the stylus 200 is attached to the electronic device 100, the electronic device 100 may use the microphone of the electronic device 100 and the microphone of the stylus 200 to jointly capture audio data.

It may be understood that the electronic device 100 may detect a status of the stylus 200 in real time during a call, and set, based on the status of the stylus 200, a microphone for capturing audio data. It should be noted that, the detecting, by the electronic device 100, the status of the stylus 200 in real time during the call may be understood as meaning that the electronic device 100 detects a status of the stylus 200 every preset time interval (for example, 10 ms), and sets, based on the status of the stylus 200, a microphone for capturing audio data. This is not limited in this embodiment of this application.

It may be further understood that, when the electronic device 100 detects that the call ends, the electronic device 100 stops performing operations of detecting the status of the stylus 200 and capturing audio data.

The following describes the call control method shown in FIG. 4 with reference to a specific application scenario.

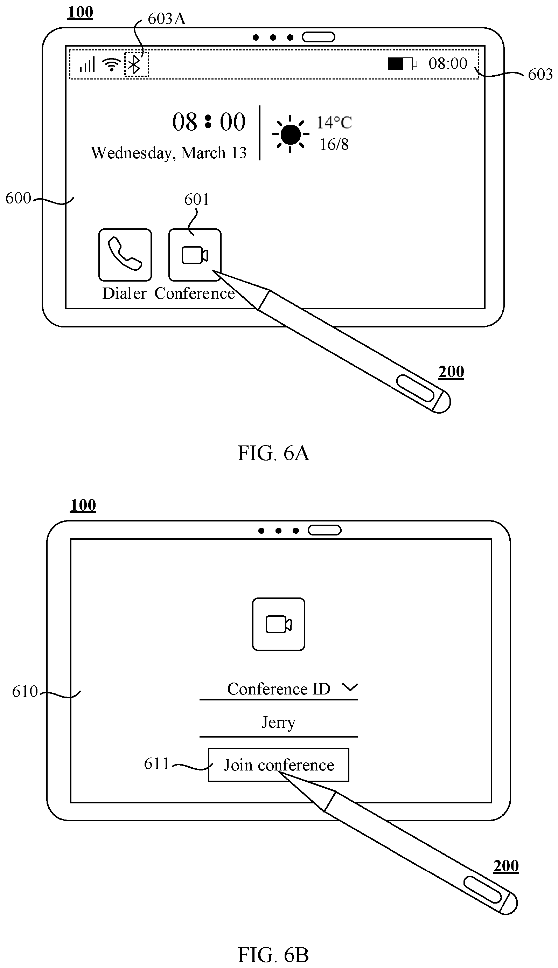

For example, as shown in FIG. 6A, the electronic device 100 displays a desktop 600. The desktop 600 may include a plurality of application icons, for example, a conference application icon 601, a dialer application icon, and the like. The conference application icon 601 may be used to trigger the electronic device 100 to display an interface of a conference application (for example, a conference interface 610 shown in FIG. 6B). The conference application may be configured to initiate/join a conference. The dialer application icon may be used to trigger the electronic device 100 to display a call interface, and the call interface may be used to make/answer a call. A status bar 603 may be further displayed above the desktop 600. A Bluetooth icon 603A may be displayed in the status bar 603. The Bluetooth icon 603A may indicate that the electronic device 100 establishes a Bluetooth connection to the stylus 200. It should be noted that, the electronic device 100 is not limited to the Bluetooth icon 603A, and when the electronic device 100 establishes a communication connection to the stylus 200 via a communication technology other than Bluetooth, the electronic device 100 may display an icon corresponding to another communication connection. This is not limited in this embodiment of this application.

After detecting an input of the stylus 200 on the conference application icon 601, the electronic device 100 may, in response to the input, display the conference interface 610 shown in FIG. 6B. As shown in FIG. 6B, the conference interface 610 includes a "Join conference" control 611. The "Join conference" control 611 may be used to trigger the electronic device 100 to establish a call connection to another electronic device, so that a user can join a conference. The conference interface 610 may further include a conference ID field and a participant field. The conference ID field may be used to enter a conference ID, so that the electronic device 100 can join a conference indicated by the conference ID. The participant field may be used to enter a participant name, so that a participant can determine, based on the participant name, an object that is currently speaking.

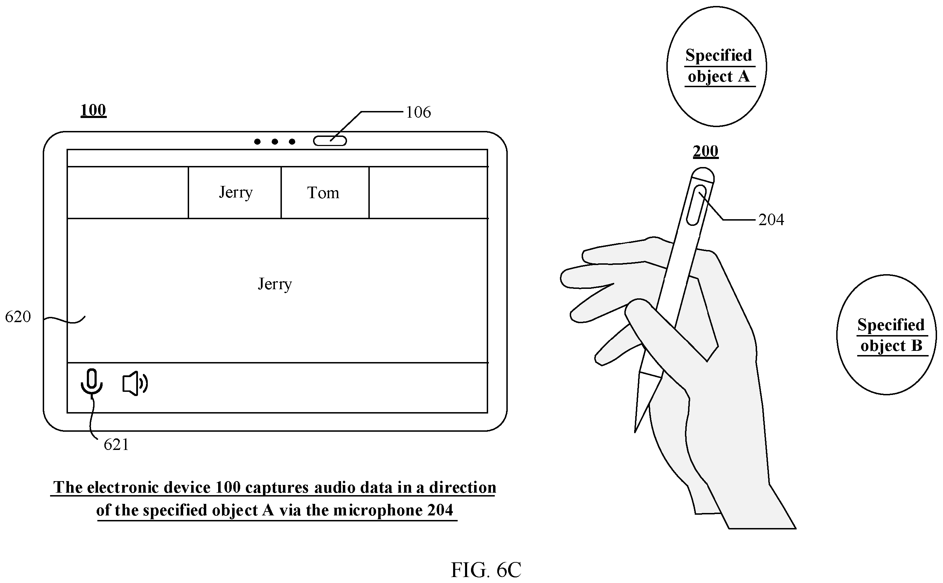

After detecting an input of the stylus 200 on the "Join conference" control 611, the electronic device 100 may, in response to the input, detect a status of the stylus 200. Upon detecting that the stylus 200 is held by the user and the stylus 200 faces a specified object A, the electronic device 100 may, via a microphone 204, capture audio data of the specified object A, and display a conference interface 620 shown in FIG. 6C.

As shown in FIG. 6C, the conference interface 620 may be used by a user to participate in an online conference. The conference interface 620 may include a microphone control 621. The microphone control 621 may indicate that a microphone is not muted. The microphone control 621 may be further used to trigger the electronic device 100 to mute. When the microphone is muted, the electronic device 100 does not perform audio data capturing. When the microphone is not muted, the electronic device 100 performs, based on a status of the stylus 200, an operation of capturing audio data. Herein, the microphone control 621 indicates that the microphone is not muted. The conference interface 620 may further include a participant list, a name of a speaking participant, a speaker control, and the like. The participant list may be used to indicate, to the user, members participating in the online conference. The name of the speaking participant may be used to indicate, to the user, a participant who is speaking. The speaker control may indicate whether a speaker is turned off. The speaker control may be further used to trigger the electronic device 100 to turn off/on the speaker.

It should be noted that when the electronic device 100 and the stylus 200 are in the scenario shown in FIG. 6C, if the user aligns the stylus 200 with a specified object B, the electronic device 100 may detect that the stylus 200 is held by the user and the stylus 200 faces the specified object B, and capture audio data of the specified object B via the microphone 204.

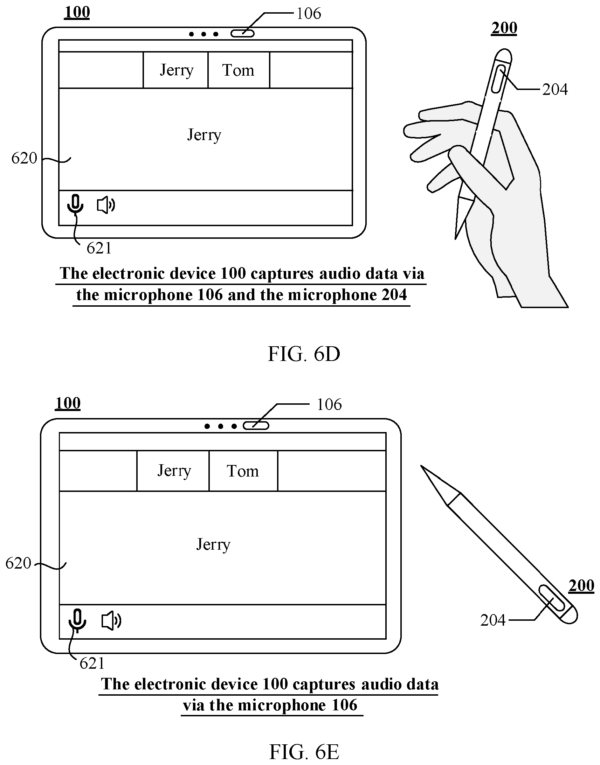

After detecting an input of the stylus 200 on the "Join conference" control 611, the electronic device 100 may, in response to the input, detect a status of the stylus 200. When the electronic device 100 detects that the stylus 200 is held by the user and the stylus 200 does not face a specified object, or when the electronic device 100 and the stylus 200 are in the scenario shown in FIG. 6C, the user moves the stylus 200 to a position that is not aligned with any specified object, and the electronic device 100 detects that the stylus 200 is held by the user and the stylus 200 does not face a specified object, the electronic device 100 may capture audio data via a microphone 106 and the microphone 204, as shown in FIG. 6D.

After detecting an input of the stylus 200 on the "Join conference" control 611, the electronic device 100 may, in response to the input, detect a status of the stylus 200. When the electronic device 100 detects that the stylus 200 is not held by the user, or when the electronic device 100 and the stylus 200 are in the scenario shown in FIG. 6C, the user puts down the stylus 200, and the electronic device 100 detects that the stylus 200 is not held by the user, or when the electronic device 100 and the stylus 200 are in the scenario shown in FIG. 6D, the user puts down the stylus 200, and the electronic device 100 detects that the stylus 200 is not held by the user, the electronic device 100 may capture audio data via the microphone 106, as shown in FIG. 6E.

In some examples, upon detecting that the stylus 200 is held by the user and the stylus 200 faces a specified object A, the electronic device 100 may capture audio data in a direction of the specified object A. Upon detecting that the stylus 200 is held by the user and the stylus 200 faces a specified object B, the electronic device 100 may capture audio data in a direction of the specified object B. In this way, when the stylus 200 is aligned with an orientation in which the specified object A is located, audio data in the orientation is captured. When the specified object A makes a sound, the audio data captured by the stylus 200 includes audio data of the specified object A. Similarly, when the stylus 200 is aligned with an orientation in which the specified object B is located, audio data in the orientation is captured. When the specified object B makes a sound, the audio data captured by the stylus 200 includes audio data of the specified object B. In this way, when a specified object is relatively far away from the electronic device 100, the electronic device 100 also captures clearer sound of the specified object via the microphone of the stylus 200.

The following describes the call control method shown in FIG. 5 with reference to a specific application scenario.

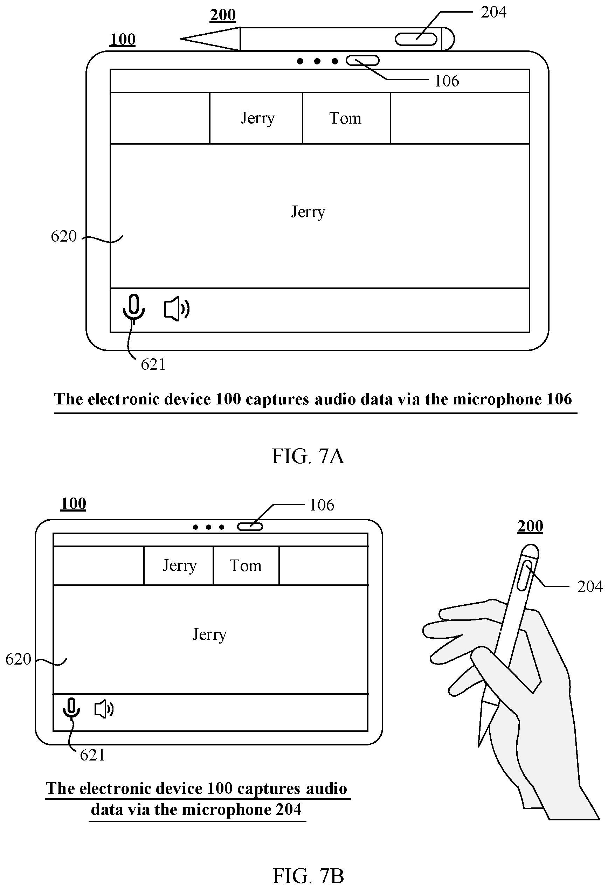

After detecting an input from the stylus 200 on a "Join conference" control 611 shown in FIG. 6B, the electronic device 100 may, in response to the input, detect a status of the stylus 200. Upon detecting that the stylus 200 is attached to the electronic device 100, the electronic device 100 may capture audio data via a microphone 106, as shown in FIG. 7A. For an input of a conference interface 620 shown in FIG. 7A, refer to the foregoing embodiments. Details are not described herein again. Herein, a microphone control 621 indicates that the microphone is not in a muted state.

After detecting an input from the stylus 200 on a "Join conference" control 611 shown in FIG. 6B, the electronic device 100 may, in response to the input, detect a status of the stylus 200. When the electronic device 100 detects that the stylus 200 is attached to the electronic device 100, or when the electronic device 100 and the stylus 200 are in the scenario shown in FIG. 7A, the user picks up the stylus 200, and the electronic device 100 detects that the stylus 200 is held by the user, the electronic device 100 may capture audio data via a microphone 204, as shown in FIG. 7B. Herein, the microphone control 621 indicates that the microphone is not in a muted state.

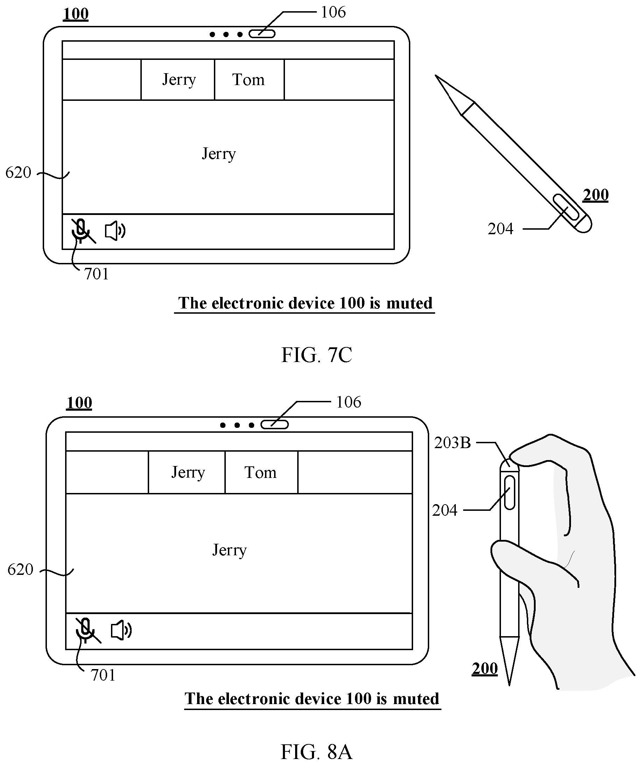

After detecting an input of the stylus 200 on a "Join conference" control 611 shown in FIG. 6B, the electronic device 100 may, in response to the input, detect a status of the stylus 200. When the electronic device 100 detects that the stylus 200 is not attached to the electronic device 100 and is not held by the user, or when the electronic device 100 and the stylus 200 are in the scenario shown in FIG. 7A, the user moves the stylus 200 away from the electronic device 100 and places the stylus 200 aside, and the electronic device 100 detects that the stylus 200 is not attached to the electronic device 100 and is not held by the user, or when the electronic device 100 and the stylus 200 are in the scenario shown in FIG. 7B, the user places the stylus 200 aside, and the electronic device 100 detects that the stylus 200 is not attached to the electronic device 100 and is not held by the user, the electronic device 100 may suspend capturing audio data and mute the electronic device 100, as shown in FIG. 7C. Herein, the electronic device 100 displays a microphone control 701, and the microphone control 701 may indicate that the microphone is in a muted state. The microphone control 701 may be further used to trigger the electronic device 100 to unmute.

In a possible implementation, the electronic device 100 establishes a communication connection to the stylus 200. The stylus 200 may detect a specified input of the user, and instruct, via the communication connection, the electronic device 100 to perform a specified operation corresponding to the specified input. In this way, in a process of using the stylus 200, the user may remotely control, via the stylus 200, the electronic device 100 to perform the specified operation, and the user does not need to operate the electronic device 100 via a touchscreen of the electronic device 100. For example, the specified input may include one or more of a specified input 1, a specified input 2, and a specified input 3. The specified input 1, the specified input 2, and the specified input 3 are different. The specified input 1 may be used to trigger the electronic device 100 to mute or unmute. The specified input 2 may be used to trigger the electronic device 100 to end a call. The specified input 3 may be used to trigger the electronic device 100 to adjust volume. In this way, during a call, the user may remotely control the electronic device 100 via the stylus 200, to facilitate user operations.

In some examples, a head portion of the stylus 200 includes a pressure sensor. The pressure sensor may be configured to detect an input of the user on the head portion of the stylus 200. The electronic device 100 captures audio data via the microphone of the electronic device 100 and/or the microphone of the stylus 200. After receiving an input (for example, single tap) of the user on the head portion of the stylus 200, the stylus 200 may instruct the electronic device 100 to mute. The electronic device 100 may suspend capturing audio data after receiving the instruction from the stylus 200. When the electronic device 100 is muted, after receiving an input (for example, single tap) of the user on the head portion of the stylus 200, the stylus 200 may instruct the electronic device 100 to unmute. After receiving the instruction from the stylus 200, the electronic device 100 may determine, based on a status of the stylus 200, a microphone for capturing audio data and capture audio data via the determined microphone. In this way, when holding the stylus 200, the user may control, via the stylus 200, the electronic device 100 to mute/unmute, and the user does not need to perform an operation on an icon that is of the electronic device 100 and that is used to control the electronic device 100 to mute/unmute, so that the user can more conveniently control the electronic device 100 to mute/unmute.

For example, when the electronic device 100 displays a conference interface 620 shown in FIG. 8A, the electronic device 100 is in a muted state. The conference interface 620 includes a microphone control 701, and the microphone control 701 may indicate that the electronic device 100 is muted.

After receiving an input of the user on a pressure sensor 203B at the head portion of the stylus 200, in response to the input, the stylus 200 may instruct the electronic device 100 to exit the muted state. After receiving an instruction to unmute from the stylus 200, the electronic device 100 may detect that the stylus 200 is held by the user. The electronic device 100 may capture audio data of the user via a microphone 204 and display a conference interface 620 shown in FIG. 7B, or the electronic device 100 may capture audio data via a microphone 106 and the microphone 204 and display a conference interface 620 shown in FIG. 6D.

In some examples, because the input of the user on the pressure sensor 203B at the head portion of the stylus 200, received by the stylus 200, may indicate that the user is holding the stylus 200, after receiving the instruction from the stylus 200 to unmute, the electronic device 100 may capture audio data of the user via the microphone 204 and display the conference interface 620 shown in FIG. 7B, or capture audio data via the microphone 106 and the microphone 204 and display the conference interface 620 shown in FIG. 6D. In this way, an operation of the electronic device 100 detecting the status of the stylus 200 can be reduced, and the electronic device 100 can perform an operation of capturing audio data more quickly.

It may be understood that, when the electronic device 100 captures audio data via the microphone 204 and/or the microphone 106, after receiving an input of the user on the pressure sensor 203B at the head portion of the stylus 200, the stylus 200 may instruct, in response to the input, the electronic device 100 to mute. After receiving an instruction to mute from the stylus 200, the electronic device 100 may stop capturing audio data and display the conference interface 620 shown in FIG. 8A.

Optionally, when the electronic device 100 captures audio data via the microphone 204, after receiving an input of the user on the pressure sensor 203B at the head portion of the stylus 200, the stylus 200 may suspend, in response to the input, capturing audio data and instruct the electronic device 100 to mute. In this way, the stylus 200 can quickly stop capturing audio data via the microphone.

It should be noted that, herein, detecting the input of the user on the stylus 200 by the pressure sensor is merely an example. The stylus 200 is not limited to the pressure sensor, and may also detect the input of the user on the stylus 200 via an ultrasonic sensor, a touch sensor, or the like. This is not limited in this embodiment of this application.

In some examples, a head portion of the stylus 200 includes a pressure sensor. The pressure sensor may be configured to detect an input of the user on the head portion of the stylus 200. When the electronic device 100 is in a call, the stylus 200 may end the call after receiving an input (for example, double tap) of the user on the head portion of the stylus 200. In this way, when holding the stylus 200, the user may control, via the stylus 200, the electronic device 100 to end the call, and the user may more conveniently control the electronic device 100 to exit the call.

For example, the electronic device 100 displays a conference interface 620 shown in FIG. 8A, and the electronic device 100 is in a conference call. After receiving an input (for example, double tap, touch and hold, or the like) of the user on a pressure sensor 203B at the head portion of the stylus 200, the stylus 200 may instruct, in response to the input, the electronic device 100 to exit the conference. After receiving an instruction to exit the conference from the stylus 200, the electronic device 100 may exit the conference and display a conference interface 610 as shown in FIG. 6B. In this way, the user may remotely control, via the stylus 200, the electronic device 100 to exit the conference.

Similarly, when the electronic device 100 is in a call and displays a call interface, after receiving an input (for example, double tap, touch and hold, or the like) of the user on the pressure sensor 203B at the head portion of the stylus 200, the stylus 200 may, in response to the input, instruct the electronic device 100 to end the call. After receiving an instruction to end the call from the stylus 200, the electronic device 100 may end the call, and display an interface displayed before the call starts. In this way, the user may remotely control, via the stylus 200, the electronic device 100 to end the call.

It may be understood that an input for triggering the electronic device 100 to mute/unmute is different from an input for triggering the electronic device 100 to end a call. The stylus 200 is not limited to the pressure sensor, and may also receive an input of the user via a touch sensor. The stylus 200 is not limited to an input of the pressure sensor disposed at the head portion of the stylus 200, and may also receive another input of the user, to trigger the electronic device 100 to mute/unmute or end a call. For example, the stylus 200 may be provided with a pressure sensor or a touch sensor at a pen tip portion, and the stylus 200 may receive an input of the user on the sensor at the pen tip portion, to trigger the electronic device 100 to mute/unmute or end a call. This is not limited in this embodiment of this application.

In some examples, a touch sensor is disposed on a body of the stylus 200. The touch sensor may be configured to detect an input of the user on a body portion of the stylus 200. When the electronic device 100 is in a call, after receiving an input (for example, a sliding input) of the user on the body portion of the stylus 200, the stylus 200 may instruct the electronic device 100 to adjust volume of the electronic device 100. For example, after receiving an input of the user sliding up on the body portion of the stylus 200, the stylus 200 may instruct the electronic device 100 to increase the volume of the electronic device 100. After receiving an input of the user sliding down on the body portion of the stylus 200, the stylus 200 may instruct the electronic device 100 to decrease the volume of the electronic device 100. In this way, when holding the stylus 200, the user may control, via the stylus 200, the electronic device 100 to adjust the volume, which is more convenient and quick.

The stylus 200 or the electronic device 100 stores a correspondence between a sliding distance and a volume adjustment value. The volume adjustment value is a difference between volume of the electronic device 100 after adjustment and volume of the electronic device 100 before adjustment. A longer distance at which the user slides on the body portion, as detected by the stylus 200, indicates a larger volume adjustment value. A shorter distance at which the user slides on the body portion, as detected by the stylus 200, indicates a smaller volume adjustment value.

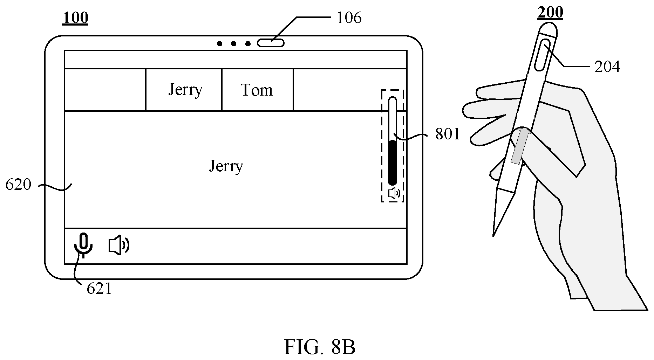

For example, the electronic device 100 is in a conference call, and displays the conference interface 620 shown in FIG. 6D or the conference interface 620 shown in FIG. 7B. After receiving an input of the user sliding up on the body portion, the stylus 200 may instruct the electronic device 100 to increase the volume by the volume adjustment value. After receiving an instruction that is sent by the stylus 200 and that is for increasing the volume by the volume adjustment value, the electronic device 100 may adjust the volume of the electronic device 100 based on the volume adjustment value, and display a conference interface 620 shown in FIG. 8B.

As shown in FIG. 8B, the conference interface 620 includes a volume adjustment bar 801. The volume adjustment bar 801 may indicate current volume of the electronic device 100. The volume adjustment bar 801 may be further used to receive a sliding input of the user, to adjust the volume of the electronic device 100.

It may be understood that, herein, detecting the input of the user on the stylus 200 by the touch sensor is merely an example. The stylus 200 is not limited to the touch sensor, and may also detect an input of the user on the stylus 200 via an ultrasonic sensor or the like. This is not limited in this embodiment of this application.

It should be noted that the foregoing specified operations performed by the electronic device 100 under the control of the stylus 200 include inputs such as muting/unmuting, ending a call, and adjusting volume. These specified operations are merely examples. In this embodiment of this application, a specified input for controlling, via the stylus 200, the electronic device 100 to perform another specified operation may also be provided. For example, when the electronic device 100 displays a slide in a conference, the stylus 200 may receive an input (for example, a left slide or a right slide) of the user, to trigger the electronic device 100 to switch a displayed slide. For another example, upon detecting, via a sensor such as a gyroscope, that the user shakes the stylus 200, the stylus 200 may trigger the electronic device 100 to turn off a speaker, turn on a speaker, or the like. This is not limited in this embodiment of this application.

In some other examples, the electronic device 100 establishes a communication connection to the stylus 200. After receiving an input for starting a call, the electronic device 100 may instruct the stylus 200 to start a call. After receiving an instruction from the electronic device 100, the stylus 200 may detect a status of the stylus 200. Upon determining, based on the status of the stylus 200, to capture audio data via the microphone of the electronic device 100, the stylus 200 may instruct the electronic device 100 to capture audio data by itself. Upon determining, based on the status of the stylus 200, to capture audio data via the microphone of the stylus 200, the stylus 200 may send captured audio data to the electronic device 100. Upon determining, based on the status of the stylus 200, to capture audio data via the microphone of the electronic device 100 and the microphone of the stylus 200, the stylus 200 may instruct the electronic device 100 to capture audio data, and send the captured audio data to the electronic device 100. Specifically, for a description of the determining, by the stylus 200 based on the status of the stylus 200, to capture audio data via the microphone of the electronic device 100 and/or the microphone of the stylus 200, refer to the foregoing embodiments. Details are not described herein again. In this way, the stylus 200 may determine by itself whether audio data needs to be captured.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A call control method, applied to an electronic device comprising a first microphone, wherein the method comprises:
receiving a first input; and
in response to the first input, capturing audio data via a second microphone of a stylus if it is detected that the stylus is held by a user; or
capturing audio data via the first microphone if it is detected that the stylus is not held by the user.

2. The method according to claim 1, wherein the capturing audio data via the first microphone if it is detected that the stylus is not held by the user comprises:
if it is detected that the stylus is not held by the user and is attached to the electronic device, capturing audio data via the first microphone.

3. The method according to claim 2, wherein the method further comprises:
if it is detected that the stylus is not held by the user and is not attached to the electronic device, suspending capturing audio data and displaying first prompt information, wherein the first prompt information is used to indicate to the user that the microphones are muted.

4. The method according to any one of claims 1 to 3, wherein the capturing audio data via the second microphone of the stylus if it is detected that the stylus is held by the user comprises:
if it is detected that the stylus is held by the user and the stylus faces a speaking object, capturing audio data via the second microphone.

5. The method according to claim 4, wherein the capturing audio data via the second microphone of the stylus if it is detected that the stylus is held by the user comprises:
if it is detected that the stylus is held by the user and the stylus does not face a speaking object, capturing audio data via the first microphone and the second microphone.

6. The method according to claim 4, wherein the capturing audio data via the second microphone comprises:
capturing, via the second microphone, audio data in a direction of the speaking object that the stylus faces.

7. The method according to claim 3, wherein after the suspending capturing audio data and displaying the first prompt information, the method further comprises:
receiving a first instruction sent by the stylus; and
in response to the first instruction, canceling display of the first prompt information and continuing to capture audio data.

8. The method according to any one of claims 1 to 7, wherein the method further comprises:
receiving a second instruction sent by the stylus; and
adjusting volume of the electronic device in response to the second instruction.

9. The method according to any one of claims 1 to 8, wherein the method further comprises:
in response to the first input, displaying a call interface;
receiving a third instruction sent by the stylus; and
in response to the third instruction, ending a call and canceling display of the call interface.

10. The method according to any one of claims 1 to 9, wherein the method further comprises:
in response to the first input, sending a fourth instruction to the stylus, wherein the fourth instruction instructs the stylus to detect a status of the stylus; and
receiving a first status sent by the stylus, wherein the first status comprises one or more of being held by the user, not being held by the user, being attached to the electronic device, not being attached to the electronic device, facing a speaking object, and not facing a speaking object.

11. A call control method, applied to a stylus comprising a second microphone, wherein the method comprises:
receiving a fourth instruction sent by an electronic device, wherein the fourth instruction instructs the stylus to detect a status of the stylus;
sending a first status to the electronic device, wherein the first status comprises one or more of being held by a user, not being held by the user, being attached to the electronic device, not being attached to the electronic device, facing a speaking object, and not facing a speaking object;
if the first status indicates that the stylus is held by the user, receiving a fifth instruction sent by the electronic device;
capturing audio data via the second microphone in response to the fifth instruction; and
sending the audio data to the electronic device.

12. The method according to claim 11, wherein if the first status indicates that the stylus is held by the user and the stylus faces the speaking object, the capturing audio data via the second microphone in response to the fifth instruction comprises:
capturing, via the second microphone, audio data in a direction of the speaking object that the stylus faces.

13. The method according to claim 11 or 12, wherein the method further comprises:
detecting a second input of the user; and
in response to the second input, sending a first instruction to the electronic device, wherein the first instruction is used to trigger the electronic device to switch a microphone status, and the microphone status comprises a muted state and a non-muted state.

14. The method according to any one of claims 11 to 13, wherein the method further comprises:
detecting a third input of the user; and
in response to the third input, sending a second instruction to the electronic device, wherein the second instruction is used to trigger the electronic device to adjust volume of the electronic device.

15. The method according to any one of claims 11 to 14, wherein the method further comprises:
detecting a fourth input of the user; and
in response to the fourth input, sending a third instruction to the electronic device, wherein the third instruction is used to trigger the electronic device to end a call.

16. A call control method, applied to a first communication system, wherein the first communication system comprises an electronic device and a stylus, the electronic device comprises a first microphone, and the stylus comprises a second microphone; and the method comprises:
receiving, by the electronic device, a first input;
sending, by the electronic device in response to the first input, a fourth instruction to the stylus, wherein the fourth instruction instructs the stylus to detect a status of the stylus;
after receiving the fourth instruction, sending, by the stylus, a first status to the electronic device in response to the fourth instruction;
if the first status received by the electronic device indicates that the stylus is held by a user, sending a fifth instruction to the stylus;
after receiving the fifth instruction, capturing, by the stylus in response to the fifth instruction, audio data via the second microphone; and
if the first status received by the electronic device indicates that the stylus is not held by the user, capturing audio data via the first microphone.

17. An electronic device, comprising one or more processors, one or more memories, and a first microphone, wherein the first microphone and the one or more memories are coupled to the one or more processors, the one or more memories are configured to store a computer-executable program, and when the one or more processors execute the computer-executable program, the electronic device is enabled to perform the method according to any one of claims 1 to 10.

18. A computer-readable storage medium, storing a computer program, wherein when the computer program runs on an electronic device, the electronic device is enabled to perform the method according to any one of claims 1 to 10.

19. A computer program product, wherein when the computer program product runs on an electronic device, the electronic device is enabled to perform the method according to any one of claims 1 to 10.

20. A stylus, comprising one or more processors, one or more memories, and a second microphone, wherein the second microphone, one or more sensors, and the one or more memories are coupled to the one or more processors, the one or more memories are configured to store a computer-executable program, and when the one or more processors execute the computer-executable program, the stylus is enabled to perform the method according to any one of claims 11 to 15.

21. A computer-readable storage medium, storing a computer program, wherein when the computer program runs on a stylus, the stylus is enabled to perform the method according to any one of claims 11 to 15.

22. A computer program product, wherein when the computer program product runs on a stylus, the stylus is enabled to perform the method according to any one of claims 11 to 15.
